# EUROPÄISCHE PATENTSCHRIFT

(11) **EP 0 709 177 B1**
(45) Veröffentlichungstag und Bekanntmachung des Hinweises auf die Patenterteilung: **29.08.2001**
(21) Anmeldenummer: 95116914.3
(22) Anmeldetag: 26.10.1995
(51) Int. Cl.: B29C 47/92, B29C 49/78, B29C 47/10

(54) **Verfahren zum Steuern einer Blasformanlage**
Method of controlling blow moulding apparatus
Procédé de contrôle d'un appareil de moulage par soufflage

(30) Priorität: 28.10.1994 DE 4438604
(43) Veröffentlichungstag der Anmeldung: 01.05.1996
(73) Patentinhaber: Feuerherm, Harald, D-53840 Troisdorf (DE)
(72) Erfinder: Feuerherm, Harald, D-53840 Troisdorf (DE)
(74) Vertreter: Albrecht, Rainer Harald, Dr.-Ing.

(56) Entgegenhaltungen:
- EP-A- 0 345 474
- EP-A- 0 536 438
- EP-A- 0 633 120
- DE-A- 3 935 338

## Beschreibung

Die Erfindung betrifft ein Verfahren zum Steuern einer Blasformanlage, die eine Dosiereinrichtung mit mindestens einem Schüttgutvorlagebehälter sowie im Arbeitstakt betätigte Anlagenteile aufweist. Eine solche Blasformanlage ist z. B. aus DE-A 39 35 338 und EP-A 0 118 672 bekannt.

Moderne Blasformanlagen sind mit elektronischen Schlauchwanddickenregelungen ausgerüstet und weisen elektrohydraulische Servosysteme für die Vorgabe und Regelung des Austrittsspaltes am Blaskopf auf (Maschinenmarkt 79 (1973) 7, 118/120). Die elektrohydraulischen Servosysteme ermöglichen eine schnelle Verstellung des Blaskopfaustrittsspaltes bei hoher Genauigkeit und guter Reproduzierbarkeit. Ein oder mehrere Hydrauliksysteme sind vorgesehen, um die elektrohydraulischen Steuerungseinrichtungen und gegebenenfalls weitere hydraulische Einrichtungen mit Hydraulikflüssigkeit zu versorgen. Das Hydrauliksystem weist einen Hydrospeicher auf, der durch eine Zuführeinrichtung bis zum Erreichen eines vorgegebenen Betriebsdruckes mit Hydraulikflüssigkeit befüllt wird (EP-A 0 407 847). Daneben sind, vornehmlich bei kleineren kontinuierlichen Blasformanlagen, elektromechanische Servosysteme für die Regelung des Blaskopfaustrittsspaltes bekannt.

Zur Materialaufbereitung des Kunststoffausgangsmaterials werden volumetrische oder gravimetrische Dosiereinrichtungen eingesetzt, die aus Kunststoffgranulat oder -pulver, Regenerat, Farbstoffen und gegebenenfalls weiteren Zusätzen ein Ausgangsgemisch möglichst gleichbleibender Zusammensetzung herstellen (Kunststoffe 80 (1990) 2, Seiten 174 bis 177; Plastverarbeiter 43 (1992) 10, Seiten 79 bis 83). Es ist bekannt, daß der Füllstand im Schüttgutvorlagebehälter sowie der Entleerungsverlauf die Förderleistung des daran anschließenden Extruders beeinflussen.

Bei Wanddickenmessungen und Gewichtsmessungen an Kunststoffhohlkörpern, die nacheinander auf einer gut ausgeregelten Blasformanlage hergestellt werden, sind noch beachtliche Schwankungen der Meßgröße feststellbar, und zwar von Arbeitstakt zu Arbeitstakt. Die von Arbeitstakt zu Arbeitstakt auftretenden Änderungen des Gewichtes und/oder der Wanddicke des Hohlkörpers haben zumeist keinen periodischen Verlauf. Sie treten auch bei gleichmäßigem Maschinenablauf, konstanter Massetemperatur und konstantem Massedruck, konstanten Umgebungsverhältnissen, gleichbleibenden Materialeigenschaften und konstantem Mischungsverhältnis des Kunststoffausgangsmaterials noch auf.

Durch diese unregelmäßigen Schwankungen ist es nur mit sehr hohem Aufwand möglich, eine Tendenz herauszufiltern um regelnd eingreifen zu können. Da vorgegebene Untergrenzen in Gewicht und Wanddicke nicht unterschritten werden dürfen, muß bei großen Störungen die Sollwertvorgabe unnötig hoch sein. Im Ergebnis resultieren unnötige Sollgewichtserhöhungen.

Der Erfindung liegt die Aufgabe zugrunde, von Arbeitstakt zu Arbeitstakt auftretende nichtperiodische Schwankungen des Gewichtes und/oder der Wanddicke zu reduzieren.

Die Erfindung setzt ein mit der Erkenntnis, daß die beschriebenen, von Takt zu Takt auftretenden, nichtperiodischen Schwankungen beispielsweise auf einer von dem Arbeitstakt der Blasformanlage entkoppelten Betriebsweise der Materialzuführung, des pneumatischen Systems und/oder gegebenenfalls des Hydrauliksystems beruhen. Eine Verbesserung des Verfahrens, welche noch geringere Qualitätsschwankungen der Kunststofferzeugnisse erwarten läßt, besteht nach den Erkenntnissen der Erfindung darin, die Materialzuführung über den Schüttgutvorlagebehälter und/oder einem dem Schüttgutvorlagebehälter vorgeschalteten Behälter, ggf. das Hydrauliksystem für hydraulische betätigte Anlagenteile und ggf. für die servohydraulische Anlagensteuerung sowie das Druckluftsystem für die Luftversorgung der pneumatisch betätigten Anlagenteile, vor allem für die Stützluft oder Vorblasluft, durch geeignete Steuerungsmaßnahmen in den Arbeitstakt der Kunststoffverarbeitungsanlage einzubeziehen.

Schüttguthöhe, Schüttgutkegel und die Entmischung beim Entleerungsablauf im Schüttgutvorlagebehälter sowie die chargenweise Dosierung und Mischung mit der Entmischung beim Transport in den Schüttgutbehälter und ggf. einen vorgeschalteten Behälter während eines Arbeitstaktes beeinflussen den Materialeinzug in einem Schneckenextruder und damit den Materialdurchsatz durch die Blasformanlage. Ist sichergestellt, daß Schüttguthöhe, Schüttgutkegel und Entleerungsablauf bei jedem oder mindestens n'ten Arbeitstakt gleich sind, ist eine für die Qualitätsschwankungen des Kunststofferzeugnisses maßgebende Störgröße eliminiert, denn der Fachmann kann sich auf immer gleiche Unterschiede im Takt, beispielsweise durch ein darauf abgestimmtes Wanddickenprogramm, mühelos einstellen. Auch Unterschieden, die in vorhersehbarer Weise immer am n'ten Takt auftreten, kann wirkungsvoll durch eine Regelung entgegengewirkt werden. Stellvorgänge im Arbeitstakt hydraulisch betätigter Anlagenteile werden beeinflußt durch den Anfangsdruck im hydraulischen System sowie durch etwaige Druck- und Geschwindigkeitsänderungen während der Stellbewegungen in einem Arbeitstakt. Stellt man sicher, daß zu einem vorgegebenen Betriebspunkt während des Arbeitstaktes das Hydrauliksystem einen definierten Betriebszustand hat, so ist auch diese Störgröße eliminierbar. Analog gilt dies für das Pneumatiksystem. Die Wertigkeit der erläuterten Störgrößen ist abhängig von dem Aufbau der Extrusionsblasformanlage. Die Einstellung definierter Verfahrensbedingungen bei der Materialzuführung, insbesondere im Schüttgutvorlagebehälter, hat im allgemeinen die höchste Wertigkeit. Bei einer Blasformanlage mit Speicherkopfbetrieb stellen Unregelmäßigkeiten im Hydrauliksystem ebenso wie Unregelmäßigkeiten beim Vorblasen ebenfalls wesentliche Störgrößen dar. Bei einer Blasformanlage, bei der ein schlauchförmiger Vorformling mittels eines Schneckenextruders unter Verwendung von Stützluft extrudiert wird, kommt dem Pneumatiksystem, vor allem für die Stützluftversorgung, größere Bedeutung zu als dem Hydrauliksystem.

Bei einer Extrusionsblasformanlage, die eine Dosiereinrichtung mit mindestens einem Schüttgutvorlagebehälter sowie im Arbeitstakt betätigte Anlagenteile aufweist, wird die zuvor erläuterte Aufgabe erfindungsgemäß dadurch gelöst, daß der Schüttgutvorlagebehälter und/oder ein dem Schüttgutvorlagebehälter vorgeschalteter Behälter in einem vorgegebenen, an den Arbeitstakt der Blasformanlage angepaßten und von einer Füllstandsmessung unabhängigen Fülltakt befüllt wird, wobei der Befüllvorgang von einem mit dem Arbeitstakt ablaufenden Steuerprogramm bei einem vorgegebenen Betriebspunkt oder von einer Schalteinrichtung, die bei einem vorgegebenen Betriebspunkt der Blasformanlage betätigt wird, eingeleitet wird. Durch das erfindungsgemäße Verfahren ist sichergestellt, daß die Anfangsschüttguthöhe, der Anfangsschüttgutkegel und der Entleerungsablauf im Schüttgutvorlagebehälter in jedem Arbeitstakt oder zumindest in jedem n'ten Arbeitstakt konstant ist. Durch die Konstanthaltung dieser Bedingungen ist eine den Materialdurchsatz pro Takt beeinflussende Störgröße eliminiert.

Die Materialaufbereitung sollte so ausgelegt sein, daß ein möglichst konstantes Gemisch gleichmäßig, taktbezogen in den Extruder gelangt. Vorzugsweise wird das Schüttgut im Fülltakt durch eine volumetrisch oder gravimetrisch arbeitende Dosiereinrichtung in einer vorher festgelegten Menge dem Schüttgutvorlagebehälter oder dem vorgeschalteten Behälter zugeführt. Ein Optimum ist erreichbar, wenn es gelingt, die Komponenten dem Schüttgutvorlagebehälter und gegebenenfalls dem vorgeschalteten Behälter in einer an das Bruttogewicht eines Hohlkörpers angepaßten Menge oder mit einem ganzzahligen Vielfachen dieser Menge im Fülltakt zuzuführen. Wenn es die Dosiereinrichtung erlaubt, kann selbstverständlich auch ein Fülltakt, der nur einen Bruchteil (1/n mit n = 2, 3 ...) des Arbeitstaktes beträgt, gewählt werden. Es versteht sich, daß in diesem Fall die Komponenten dem Schüttgutvorlagebehälter in einer Menge zugeführt werden, die einen Bruchteil des Hohlkörperbruttogewichtes beträgt. Nach bevorzugter Ausführung und wenn es die Dosiereinrichtung erlaubt, ist 1/n so groß zu wählen, daß sich keine größeren Füllstandsschwankungen im Schüttgutvorlagebehälter einstellen. Zweckmäßig können, wie schon beschrieben, die einzelnen Befüllungen von einem mit dem Arbeitstakt ablaufenden Steuerprogramm bei vorgegebenen Betriebspunkten oder von einer Schalteinrichtung, die bei vorgegebenen Betriebspunkten der Blasformanlage betätigt wird, eingeleitet werden. Die Zeitintervalle zwischen den einzelnen Befüllungen müssen nicht gleich groß sein. Entscheidend ist, daß die Befüllungen von Takt zu Takt stets bei den selben Betriebspunkten ausgeführt werden.

Der Schüttgutvorlagebehälter ist ferner zweckmäßigerweise mit einer Füllstandsüberwachung ausgerüstet, wobei die Befüllung bei Erreichen eines oberen Grenzwertes gestoppt wird. Eine Mindestabnahme ist erforderlich, bevor der dem oberen Grenzwert zugeordnete Meßfühler, der den Befüllvorgang stoppt, wieder frei wird. Um insbesondere bei kleinen Blaskörpergewichten eine dem Arbeitstakt der Blasformanlage entsprechenden Fülltakt sicherzustellen, empfiehlt die Erfindung, daß der dem oberen Grenzwert zugeordnete Meßfühler in einer oberseitigen Meßkammer des Schüttgutvorlagebehälters angeordnet wird, die einen gegenüber dem Querschnitt des Schüttgutvorlagebehälters, welcher der Schüttgutoberfläche zugeordnet ist, reduzierten Meßkammerquerschnitt aufweist. Eine andere Ausführung der Erfindung sieht vor, daß der dem oberen Grenzwert zugeordnete Meßfühler nicht an des Wandung des Schüttgutvorlagebehälters sondern in der dem Schüttgutkegel zugeordneten Mittelachse des Schüttgutvorlagebehälters angeordnet wird. Auch durch eine solche Anordnung ist eine gute Ansprechgenauigkeit erreichbar. Zweckmäßigerweise ist die Füllstandsüberwachung ferner so eingerichtet, daß unabhängig von dem Fülltakt eine zusätzliche Befüllung des Schüttgutvorlagebehälters erfolgt, wenn ein unterer Grenzwert erreicht wird. Dabei sollte auch eine Störmeldung erfolgen.

Ist der Schüttgutvorlagebehälter oder ein dem Schüttgutvorlagebehälter vorgeschalteter Trichter zusätzlich mit einem Mischer ausgerüstet, so sollte dieser kontinuierlich oder ebenfalls taktabhängig gesteuert werden. Bei Verwendung eines kontinuierlich betriebenen Mischers empfiehlt die Erfindung, daß der Mischer bei einer Störung der Blasformanlage so betrieben wird, daß die Durchmischung erhalten bleibt. Die geeignete Betriebsweise des Mischers im Falle einer Störung der Blasformanlage ist anhand von Versuchen festlegbar.

In weiterer Ausgestaltung lehrt die Erfindung, daß das Schüttgut aus einem dem Schüttgutvorlagebehälter vorgeschalteten Behälter durch Betätigen eines Auslaßelementes, beispielsweise eines Auslaßschiebers, in den Schüttgutvorlagebehälter abgelassen wird, wobei das Auslaßelement in einem an den Arbeitstakt der Blasformanlage angepaßten Takt geöffnet und geschlossen wird, wobei das Öffnungsintervall so bemessen ist, daß das Schüttgut beim Schließen des Auslaßelementes über das Auslaßelement hinaus in den oberhalb des Schüttgutvorlagebehälters angeordneten Behälter zurückstaut. Es versteht sich, daß das Auslaßelement auch in einem Bruchteil 1/n des Arbeitstaktes geöffnet und geschlossen werden kann, wenn ein mehrmaliges Befüllen des Schüttgutvorlagebehälters während eines Arbeitstaktes erforderlich ist. Ein mehrmaliges Betätigen des Auslaßelementes ist zu empfehlen, wenn in dem vorgeschalteten Behälter die Materialcharge aus Einzelkomponenten angesetzt und homogenisiert wird oder um den Füllstand im Schüttgutvorlagebehälter nicht zu weit absinken zu lassen. Die beschriebene Arbeitsweise mit dem Auslaßelement führt zu definierten Verfahrensbedingungen bei der Materialzuführung am Extrudereingang, und zwar von Arbeitstakt zu Arbeitstakt gleichbleibend. So beginnt die Materialzuführung zum Schneckenextruder stets mit einer durch die Position des Auslaßelementes vorgegebenen, von Arbeitstakt zu Arbeitstakt gleichbleibenden Schüttguthöhe. Es resultiert eine gleichmäßige Entleerung mit von Arbeitstakt zu Arbeitstakt konstantem Entleerungsablauf mit gleichbleibenden Entmischungsvorgängen. Durch das Auslaßelement ist die Schüttguthöhe zu Beginn des Entleerungsvorganges (Schließzeitpunkt des Auslaßelementes) noch definierter eingestellt, als dies mit der zuvor beschriebenen Füllstandsüberwachung erreichbar ist. Schließlich kann mit dem Auslaßelement, das erfindungsgemäß angeordnet und betätigt wird, bei jedem Takt ein gleichmäßiger Zustand erzeugt werden, und zwar auch, wenn die Blaskörper nur ein sehr kleines Bruttogewicht besitzen und die für einen Arbeitstakt benötigte Materialmenge sehr klein ist.

Die Befüllung des dem Schüttgutvorlagebehälters vorgeschalteten Behälters kann kontinuierlich oder chargenweise erfolgen. Beim Blasformen wird häufig ein Materialgemisch mit hohem Regeneratanteil verarbeitet. Eine typische Charge besteht beispielsweise aus
- 50 bis 70: Gewichtsprozent originärem Kunststoff,
- 1: Gewichtsprozent Farbstoffen,
- 49 bis 29: Gewichtsprozent Regenerat.

Nach bevorzugter Ausführungsform der Erfindung werden dem Behälter zumindest zwei gravimetrisch dosierte Materialströme zugeführt und durch ein Mischaggregat mit rotierenden Mischelementen und/oder einem statischen Mischer in dem Behälter homogenisiert. Die gravimetrische Dosierung kann chargenweise oder kontinuierlich erfolgen.

Bei Blasformanlagen sind vielfach zwei oder mehr Schneckenextruder vorgesehen, die gemeinsam an einen Kopf der Blasformanlage angeschlossen sind. Dabei kann der Kopf der Blasformanlage als Speicherkopf oder Strangpreßkopf ausgeführt sein. Gegenstand der Erfindung ist daher auch ein Verfahren zum Steuern einer Blasformanlage mit mindestens zwei Schneckenextrudern, die gemeinsam an einen Kopf der Blasformanlage angeschlossen sind, wobei jedem Extruder ein Schüttgutvorlagebehälter zugeordnet ist und die Schüttgutvorlagebehälter von einer Dosiereinrichtung mit Schüttgut versorgt werden, wobei sämtliche Schüttgutvorlagebehälter nach einem festen Plan in einem vorgegebenen, an den Arbeitstakt der Blasformanlage angepaßten Fülltakt mit einer vorbestimmten Schüttgutmenge beschickt werden, wobei die Füllstände in den Schüttgutvorlagebehältern zu gegebenen Zeitpunkten des Arbeitstaktes der Blasformanlage gemessen werden und wobei bei einer Abweichung der Füllstandsmeßwerte von vorgegebenen Sollwerten mindestens eine Maßnahme zur Durchsatzangleichung eines Schneckenextruders angewendet wird. Die beschriebenen Maßnahmen können ergänzend oder alternativ auch bei Behältern durchgeführt werden, die den Schüttgutvorlagebehältern vorgeschaltet sind.

Gegenstand der Erfindung ist schließlich ein Verfahren zum Steuern einer Blasformanlage mit zwei für gleiche Durchsatzmengen ausgelegten Schneckenextrudern gemäß dem Anspruch 12.

Eine weitere Ausführungsform des erfindungsgemäßen Verfahrens, die alternativ oder auch in Kombination mit dem zuvor beschriebenen Verfahren betrieben werden kann, ist dadurch gekennzeichnet, daß ein Hydrospeicher des Hydrauliksystems, das der Versorgung von im Arbeitstakt der Blasformanlage betätigten Anlagenteilen mit Hydraulikflüssigkeit dient, in einem vorgegebenen, an den Arbeitstakt der Blasformanlage angepaßten Fülltakt mit Hydraulikflüssigkeit bis zum Erreichen eines vorgegebenen Betriebsdruckes befüllt wird, wobei eine Zuführeinrichtung zur Befüllung des Hydrospeichers von einem mit dem Arbeitstakt ablaufenden Steuerprogramm bei einem vorgegebenen Betriebspunkt oder von einer Schalteinrichtung, die bei einem vorgegebenen Betriebspunkt der Blasformanlage betätigt wird, angesteuert wird. Es versteht sich, daß eine zusätzliche Befüllung des Hydrospeichers vorgenommen wird, wenn ein unterer Betriebsdruck erreicht wird. Das beschriebene Verfahren ist besonders vorteilhaft bei einer Blasformanlage mit Speicherkopf, hydraulisch betätigter Blasform sowie hydraulisch betätigten Zusatzeinrichtungen, wobei in einem Arbeitstakt der Speicherkopf mit thermoplatifiziertem Kunststoff befüllt und das Kunststoffmaterial anschließend in demselben Arbeitstakt mit Hilfe eines hydraulisch betätigten Kolbens ausgestoßen wird und wobei der Speicherkopf, die Blasform und die Zusatzeinrichtungen an das Hydrauliksystem angeschlossen sind. Der Befüllvorgang des Hydrospeichers wird zu einem vorgegebenen Betriebspunkt während der Befüllung des Speicherkopfes ausgelöst. Sind mehrere Hydrauliksysteme für eine servohydraulische Steuerung des Speicherkopfaustrittsspaltes und dergleichen vorgesehen, so sollten auch diese Hydrauliksysteme einen im Arbeitstakt der Blasformanlage befüllten Hydrospeicher aufweisen.

Eine dritte Ausführungsform des erfindungsgemäßen Verfahrens, die alternativ oder in Kombination mit einem der zuvor beschriebenen Verfahren anwendbar ist, ist dadurch gekennzeichnet, daß der Arbeitsdruck des mit einem Druckluftspeicher ausgerüsteten Druckluftnetzes, aus dem im Arbeitstakt Druckluft entnommen wird, in einem vorgegebenen, dem Arbeitstakt der Blasformanlage angepaßten Takt auf einen vorgegebenen Druckwert eingestellt wird. Die Speisung des Druckluftnetzes kann durch ein betriebliches Netz, an welches weitere Verbraucher angeschlossen sind, erfolgen. Es versteht sich, daß zwischen dem betrieblichen Netz und dem der Blasformanlage zugeordneten Druckluftnetz eine Druckreduzierstation vorgesehen ist. In Kombination mit der Druckreduzierstation ist der Druckluftspeicher so zu dimensionieren, daß der Betriebsdruck im Druckluftnetz von Druckschwankungen im betrieblichen Netz weitestgehend unabhängig ist. Die Einstellung des Arbeitsdruckes im Druckluftnetz wird von einem mit dem Arbeitstakt ablaufenden Steuerprogramm bei einem vorgegebenen Betriebspunkt oder einer Schalteinrichtung, die bei einem vorgegebenen Betriebspunkt der Blasformanlage betätigt wird, ausgelöst. Das Verfahren ist vorteilhaft bei einer Blasformanlage, wobei Stütz- oder Blasluft, die im Zuge einer Vorformlingsherstellung von der Einformung des Vorformlings in einer Blasform benötigt wird, aus dem Druckluftnetz nach erfolgter Einstellung des Arbeitsdruckes entnommen wird.

Im folgenden wird die Erfindung anhand einer lediglich ein Ausführungsbeispiel darstellenden Zeichnung ausführlicher erläutert. Es zeigen schematisch
- Fig. 1: das Anlagen- und Steuerungsschema einer Blasformanlage mit kontinuierlich betriebenem Strangpreßkopf,
- Fig. 2: das Anlagen- und Steuerungsschema einer Blasformanlage mit Speicherkopfbetrieb,
- Fig. 3: den Entleerungsablauf in einem Schüttgutvorlagebehälter,
- Fig. 4: bis 9 konstruktive Ausgestaltungen von Anlagenteilen der in den Figuren 1 und 2 dargestellten Blasformanlagen,
- Fig. 10: die Materialzuführung einer Blasformanlage mit zwei Schneckenextrudern, die gemeinsam an einen Kopf der Blasformanlage angeschlossen sind und von einer einzigen Dosiereinrichtung beschickt werden.

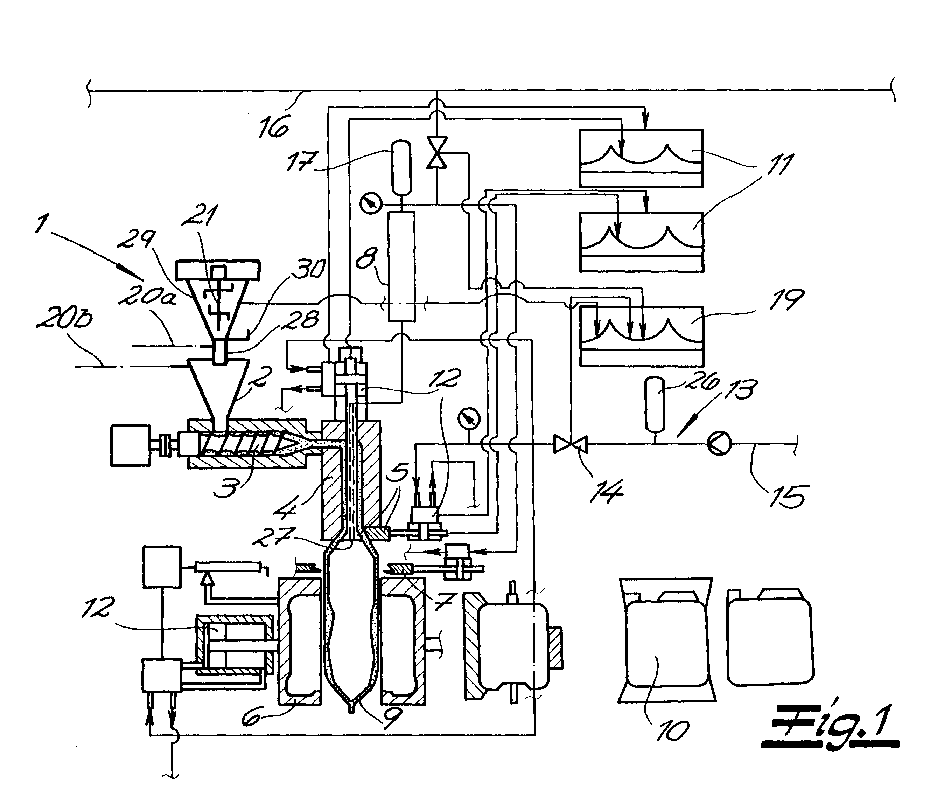

Zum grundsätzlichen Aufbau der in Fig. 1 dargestellten Blasformanlage gehören eine Misch- und Dosiereinrichtung 1 für mehrere Komponenten (Kunststoffgranulat oder Kunststoffpulver, Regenerat, Zusatzregenerat und Farben) mit einem Schüttgutvorlagebehälter 2, ein Schneckenextruder 3, ein Strangpreßkopf 4 mit Düsenspaltverstelleinrichtungen 5, eine Blasform 6 sowie eine Schneid- und Schließeinrichtung 7. Im Schüttgutvorlagebehälter 2 vorgelegtes Schüttgut wird mit Hilfe des Schneckenextruders 3 plastifiziert und aus dem Düsenspalt des Strangpreßkopfes 4 extrudiert. Bei der Extrusion wird Stützluft 27 eingesetzt, die einem Druckluftnetz 8 entnommen wird. Es entsteht ein schlauchförmiger Vorformling 9, der mit Hilfe der Schneid- und Schließeinrichtung 7 von dem extrudierten Strang abgetrennt wird, wobei das neue Ende verschlossen und der Vorformling 9 in der Blasform 6 zu einem Hohlkörper 10 aufgeweitet wird. Der Hohlkörper 10 wird aus der Blasform 6 ausgeformt, und Abfallbutzen werden entfernt.

Die Blasformanlage ist mit einer elektronischen Schlauchwanddickenregelung 11 ausgerüstet und weist eine elektrohydraulische Servosteuerung 12 für die Düsenspaltverstelleinrichtungen 5 auf. Eine weitere elektrohydraulische Steuerung, die auch als Servosteuerung 12 ausgelegt sein kann, ist der Blasform 6 zugeordnet. Die elektrohydraulischen Servosteuerungen 12 sind an ein Hydrauliksystem 13 mit Hydrospeicher 26 und mit Drucküberwachung 14 angeschlossen. Zum Befüllen des Hydrospeichers 26 ist eine Zuführeinrichtung 15 vorgesehen.

Das Druckluftnetz 8 ist unter Zwischenschaltung einer Druckreduzierstation an ein Betriebsnetz 16, an das weitere Verbraucher angeschlossen sind, angeschlossen und weist einen Druckluftspeicher 17 sowie eine Drucküberwachungseinrichtung auf. Stützluft für die Extrusion wird dem Druckluftnetz 8 entnommen. Auch die pneumatisch betätigbare Schneid- und Schließeinrichtung 7 sollte vorzugsweise von dem Druckluftnetz 8 mit Druckmittel versorgt werden.

Der Schüttgutvorlagebehälter 2 wird in einem vorgegebenen, an den Arbeitstakt der Kunststoffverarbeitungsanlage angepaßten und von einer Füllstandsmessung unabhängigen Fülltakt befüllt. Der Befüllvorgang wird von einem mit dem Arbeitstakt ablaufenden Steuerprogramm 19 bei einem vorgegebenen Betriebspunkt eingeleitet. Die Zuführung des Schüttgutes zu dem Schüttgutvorlagebehälter 2 erfolgt im Fülltakt durch eine volumetrisch oder gravimetrisch arbeitende Dosiereinrichtung in vorher festgelegten Mengen der einzelnen Komponenten. Zweckmäßigerweise werden die Komponenten dem Schüttgutvorlagebehälter 2 in einer an das Bruttogewicht des Blaskörpers angepaßten Menge oder mit einem ganzzahligen Vielfachen dieser Menge im Fülltakt zugeführt. Der Schüttgutvorlagebehälter 2 ist ferner mit einer Füllstandsüberwachung 20a, b ausgerüstet. Die Schaltung ist so eingerichtet, daß die Befüllung bei Erreichung eines oberen Grenzwertes 20a gestoppt wird und daß unabhängig von dem Fülltakt eine zusätzliche Befüllung des Schüttgutvorlagebehälters 2 erfolgt, wenn ein unterer Grenzwert 20b erreicht wird. Außerdem weist der vorgeschaltete Behälter 29 einen Mischer 21 auf.

Da jede Förderung von Material, insbesondere eines fertigen Materialgemisches, zu einem Entmischen führt, wird vorzugsweise auch die Beschickung des dem Schüttgutvorlagebehälter 2 vorgeschalteten Behälters 29 taktabhängig und im Sinne einer weiteren Optimierung mit einer an das Bruttogewicht des Vorformlings angepaßten Materialmenge vorgenommen.

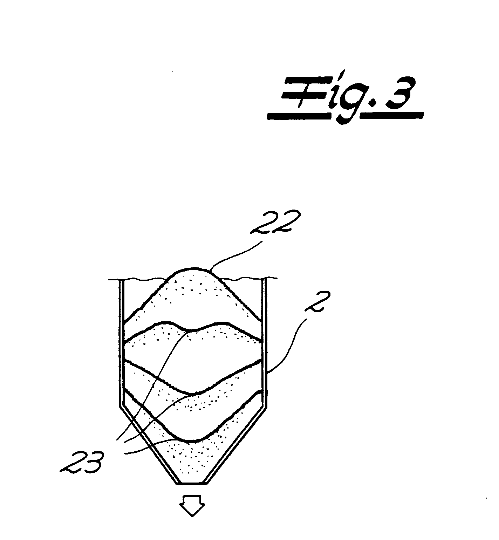

Fig. 3 zeigt schematisch den Entleerungsablauf aus einem Schüttgutvorlagebehälter während eines Arbeitstaktes ohne Mischer. Nach Befüllung des Schüttgutvorlagebehälters stellt sich ein Schüttgutkegel 22 ein. Bei Entnahme von Schüttgut ändert sich das Profil der Schüttgutoberfläche, wobei sich ein Schüttguttrichter 23 bildet. Durch das erfindungsgemäße Verfahren ist der Entleerungsablauf bei jedem Arbeitstakt gleich. Also stellen sich definierte, von Arbeitstakt zu Arbeitstakt gleichbleibende Einzugsverhältnisse an dem Schneckenextruder 3 ein. Hauptentmischungsbereiche, die dem Ende und Anfang der Befüllung/ Förderung zugeordnet sind, sollten in den Butzenbereich des zu fertigenden Hohlkörpers fallen, vorzugsweise, in Extrusionsrichtung gesehen, den unteren Butzen. Dies läßt sich dadurch ohne weiteres einrichten, daß die Befüllung einem geeigneten Arbeitspunkt innerhalb des Arbeitstaktes zugeordnet wird.

Durch in den Figuren nicht näher dargestellte Meßeinrichtungen erkennt die Dosiereinrichtung 1, wenn im Blasformverfahren eine Störung auftritt. Eine Betriebsstörung beim Blasformen kann die Zuordnung der Hauptentmischungsbereiche im Materialgemisch in bezug auf den Vorformling beeinflussen. Wenn eine Betriebsstörung aufgetreten ist, ist die Befüllmenge und der Befüllzeitpunkt während eines oder einiger nachfolgender Arbeitstakte so einzurichten, daß die Dosiereinrichtung nach einem oder einigen wenigen Arbeitstakten wieder in der gewünschten Zuordnung zum Arbeitstakt der Blasformanlage arbeitet.

Der Fig. 3 entnimmt man, daß eine Mindestabnahmemenge erforderlich ist, bevor der dem oberen Grenzwert 20a zugeordnete Meßfühler wieder frei wird. Um insbesondere bei kleinen Blaskörpergewichten einen dem Arbeitstakt der Blasformanlage entsprechenden Fülltakt sicherzustellen, ist der dem oberen Grenzwert 20a zugeordnete Meßfühler in einer oberseitigen Meßkammer 28 des Schüttgutvorlagebehälters 2 angeordnet (Fig. 4 bis 6). Diese weist einen gegenüber dem Querschnitt des Schüttgutvorlagebehälters 2 - gemessen im Bereich der Schüttgutoberfläche - reduzierten Meßkammerquerschnitt auf. Reichen die beschriebenen Maßnahmen nicht aus, um einen dem Arbeitstakt der Blasformanlage entsprechenden Fülltakt sicherzustellen, erfolgt die Befüllung des Schüttgutvorlagebehälters alle n-Takte (n = 2, 3, ...). Werden Hohlkörper gefertigt, die ein sehr großes Hohlkörpergewicht aufweisen, kann es sinnvoll sein, eine mehrfache Befüllung des Schüttgutvorlagebehälters 2 während eines Arbeitstaktes vorzunehmen. In diesem Fall ergibt sich ein Fülltakt, der den 1/n-ten Teil des Arbeitstaktes (n = 2, 3, ...) beträgt. Die beschriebene Verfahrensweise kann ferner sinnvoll sein, um bei Anordnungen mit einem Mischer 21 im Mischtrichter 29 keine zu große Entleerung zu bekommen.

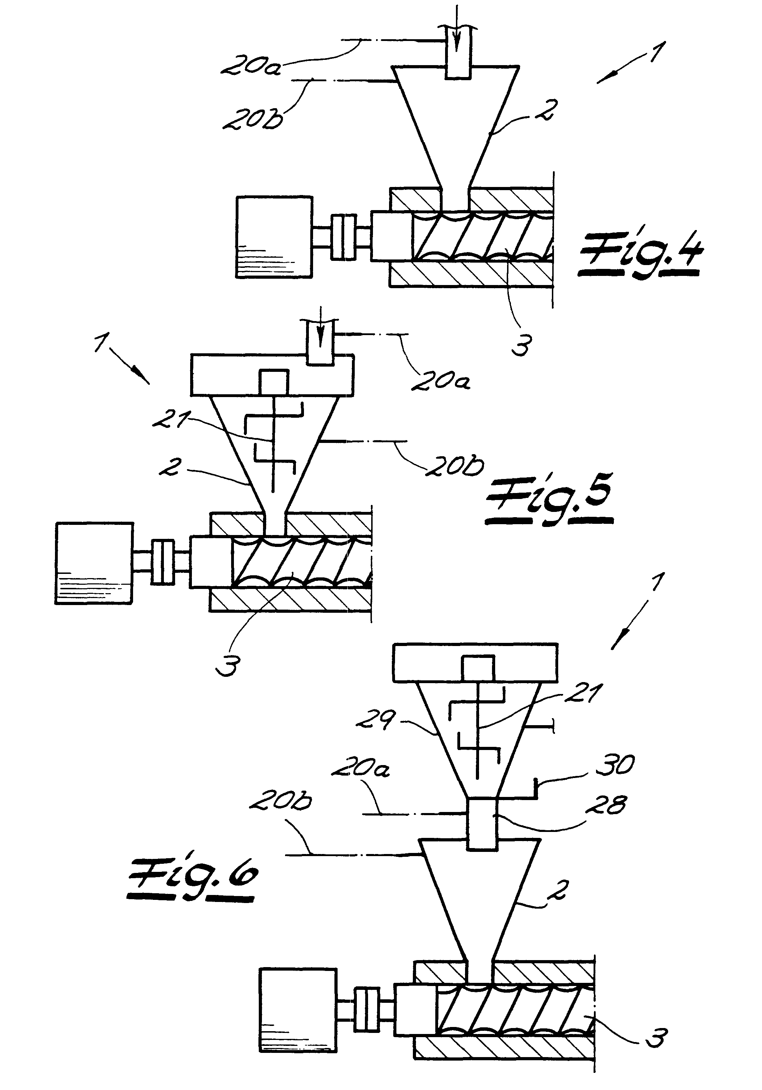

Die anlagenmäßige Ausgestaltung der Dosiereinrichtung 1 ist auf verschiedene Weise möglich. Die Figuren 4 und 5 zeigen Ausführungen, bei denen ein fertiges Gemisch pneumatisch oder mit Hilfe einer nicht dargestellten Fördereinrichtung dem Schüttgutvorlagebehälter 2 zugeführt wird. Enthält der Schüttgutvorlagebehälter keinen Mischer, so erfolgt die Materialzuführung vorzugsweise zentrisch, was anzustreben ist (Fig. 4). Die Figur 5 zeigt einen Schüttgutvorlagebehälter 2 mit eingebautem Mischer 21. Die Materialzuführung erfolgt dezentral. Der Betrieb des Mischers erfolgt mit einem an den Arbeitstakt der Blasformanlage angepaßten Maschinentakt. Auch kontinuierlich betriebene Mischer sind einsetzbar. Bei Einsatz kontinuierlich betriebener Mischer werden diese bei einer Störung der Blasformanlage abgeschaltet: und nach Beseitigung der Störung mit dem Arbeitstakt wieder zugeschaltet. Eine solche Maßnahme empfiehlt sich, um Entmischungsvorgängen gegenzuwirken. Die Ausführung nach Fig. 5 stellt eine mögliche, aber keine bevorzugte Ausführungsform dar, da durch den Mischer 21 ein unterschiedlicher Druck auf die Schnecke 3 und keine sehr gleichmäßige Entleerung gemäß Fig. 3 erfolgt. Besser ist die Ausführung nach Fig. 6. Diese zeigt eine Misch- und Dosiereinrichtung 1 mit einem oberhalb des Schüttgutvorlagebehälters angeordneten Mischtrichter 29 mit Mischer 21. Der Mischtrichter 29 wird chargenweise beschickt. Die Zuführung des Materials zu dem Schüttgutvorlagebehälter 2 ist durch ein beispielsweise als Schieber ausgebildetes zwischengeschalteten Auslaßelement 30, auf das später noch gesondert eingegangen werden soll, steuerbar. Dosierung der Komponenten und Mischung erfolgt bei diesem Ausführungsbeispiel direkt oberhalb des Schüttgutvorlagebehälters 2. Die Herstellung einer neuen Charge im Mischtrichter 29 erfolgt vorzugsweise in Abhängigkeit des Arbeitstaktes bzw. eines ganzzahligen Vielfachen oder wenn sinnvoll eines Bruchteiles 1/n des Arbeitstaktes der Blasformanlage.

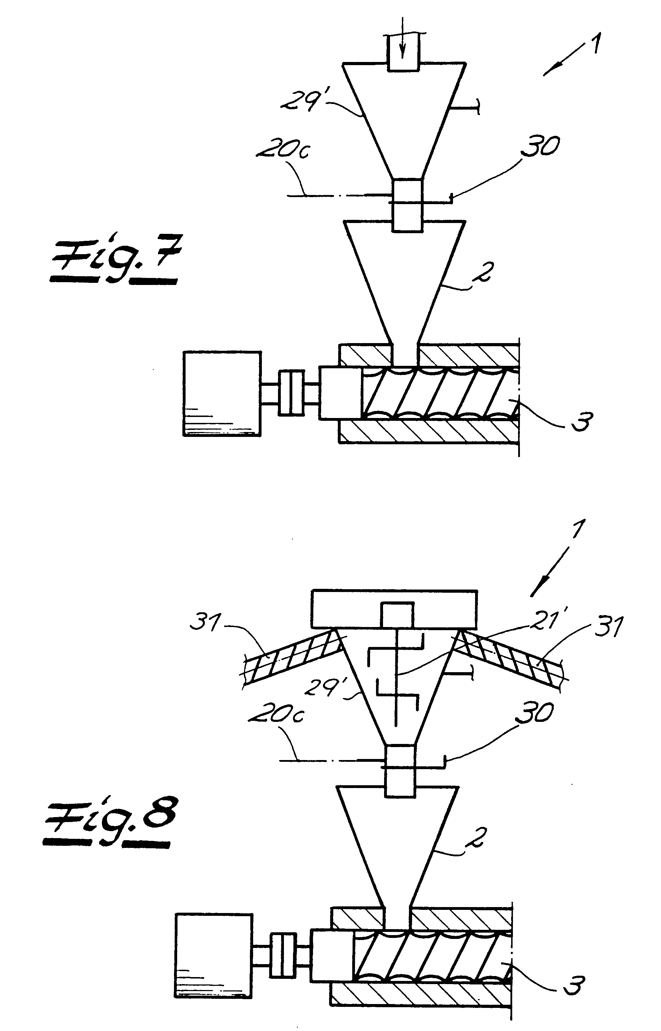

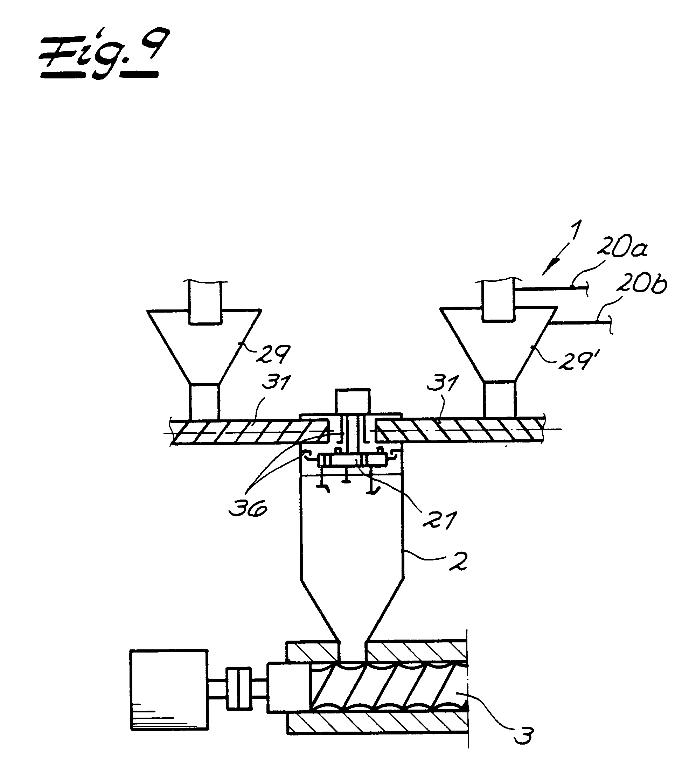

Die in den Figuren 7 und 8 dargestellten Misch- und Dosiereinrichtungen 1 weisen einen dem Schüttgutvorlagebehälter 2 vorgeschaltenen Behälter 29', z. B. in Form eines Mischtrichters, auf. Das Schüttgut wird aus dem vorgeschalteten Behälter 29' durch Betätigen eines Auslaßschiebers 30 in den Schüttgutvorlagebehälter 2 abgelassen, wobei der Auslaßschieber 30 in einem an den Arbeitstakt der Blasformanlage angepaßten Takt geöffnet und geschlossen wird. Das Öffnungsintervall ist so bemessen, daß das Schüttgut beim Schließen des Auslaßschiebers über den Auslaßschieber hinaus in den oberhalb des Schüttgutvorlagebehälters 2 angeordneten Behälter 29' zurückstaut. Bei dieser Arbeitsweise muß in dem vorgeschalteten Behälter 29'stets Material vorhanden sein. Zur Überwachung ist in dem vorgeschalteten Behälter zweckmäßigerweise ein Füllstandsmelder 20c angeordnet. Der Auslaßschieber 30 gewährleistet definierte, von Arbeitstakt zu Arbeitstakt gleiche Entleerungsabläufe im Schüttgutvorlagebehälter 2 und damit definierte Bedingungen am Eingang des Schneckenextruders 3. Bei der in Fig. 7 dargestellten Ausführung wird das Aufgabematerial in homogener Vormischung aus einem nicht dargestellten, vorgeschalteten Mischer dem Behälter 29' zugeführt. Die Fig. 8 zeigt eine Ausführungsform, bei der die einzelnen Komponenten mittels gravimetrisch arbeitender Förderschnecken 31 dem Behälter 29' zugeführt und durch ein Mischaggregat 21', welches um eine vertikale Achse rotierende Mischelemente aufweist, in dem Behälter 29' homogenisiert werden. Der Schaltpunkt für die Befüllung der Behälter 29, 29' braucht nicht mit dem Schaltpunkt des Schüttgutvorlagebehälters 2 übereinzustimmen. Die Schaltpunkte sind so zu legen, daß der Hauptentmischungsbereich in den Butzenbereich des Hohlkörpers fällt.

Im Anschluß an eine Störung sollte bei der diskontinuierlichen Gravimetrie (Fig. 8) durch eine Füllstandsmessung oder Gewichtsmessung für vorzugsweise schon den nächsten Takt eine Korrektur der nächsten Charge erfolgen. Die Steuerung ist so einzurichten, daß im Anschluß an eine Betriebsstörung möglichst schnell wieder die richtigen, dem Bruttogewicht der Hohlkörper zugeordneten Materialmengen dosiert werden.

Bei der in Fig. 9 dargestellten Ausführung weist die Dosiereinrichtung 1 mindestens zwei Behälter 29, 29' auf, aus denen vorzugsweise gravimetrisch dosierte Materialströme mittels Förderschnecken 31 dem Schüttgutvorlagebehälter 2 zugeführt werden. Einer der vorgeschalteten Behälter 29 wird mit Kunststoffgranulat aus originärem Kunststoff, der andere Behälter 29' mit Regenerat beschickt. Vornehmlich im Regeneratbehälter 29' treten beim Beschicken und Entleeren Entmischungsvorgänge auf. Zumindest die Befüllung des Regeneratbehälters 29' erfolgt in der schon beschriebenen Weise in einem an dem Arbeitstakt der Blasformanlage angepaßten Fülltakt, vorzugsweise mehrfach in einem Arbeitstakt zu vorgegebenen Betriebspunkten eines mit dem Arbeitstakt ablaufenden Steuerprogramms. Der Materialaustrag aus den Behältern 29 ist kontinuierlich, wobei die Materialströme so bemessen sind, daß sich im Schüttgutvorlagebehälter 2 ein konstantes Schüttgutniveau einstellt. Durch eine Füllstandsmeßeinrichtung oder durch eine Gewichtsmessung des Schüttgutvorlagebehälters 2 wird das Schüttgutniveau im Schüttgutvorlagebehälter 2 erfaßt. Treten Abweichungen von einem vorgegebenen Sollwert auf, so werden die Schneckendrehzahlen der Förderschnecken 31 entsprechend angepaßt. In dem Aufgabebereich des Schüttgutvorlagebehälters 2 ist ein statischer Mischer 36 angeordnet, durch dessen Wirkung die Schüttgutoberfläche gleichmäßig mit dem Aufgabegut beaufschlagt wird. Außerdem. ist ein Mischaggregat 21 mit rotierenden Mischelementen vorgesehen, die in das im Schüttgutvorlagebehälter enthaltene Aufgabematerial eintauchen und das Material weiter homogenisieren, aber bevorzugt nur im oberen Bereich des Schüttgutes arbeiten, um kein Entmischen zu erhalten und um einen konstanten Druck auf der Extruderschnecke vorliegen zu haben.

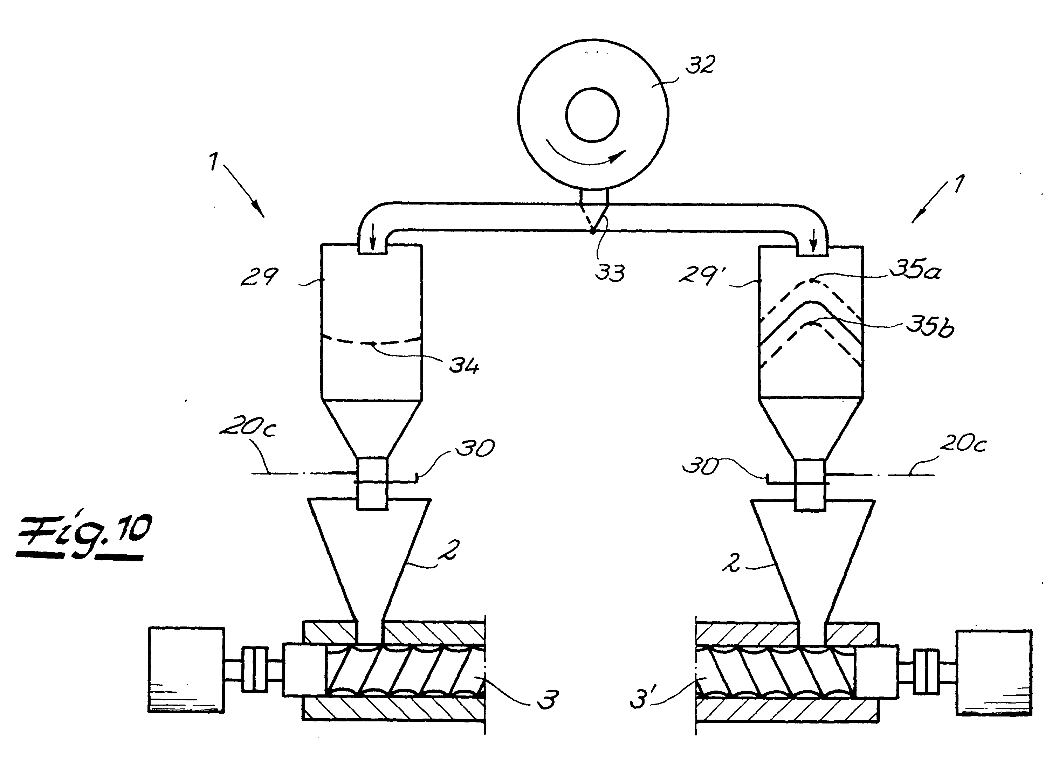

Die Figur 10 zeigt eine Misch- und Dosiereinrichtung 1 für eine Blasformanlage mit zwei für gleiche Durchsatzmengen' ausgelegten Schneckenextrudern 3, 3', die gemeinsam an einen nicht dargestellten Kopf der Blasformanlage angeschlossen sind. Jedem Extruder 3, 3' ist ein Schüttgutvorlagebehälter 2 und im dargestellten Ausführungsbeispiel auch ein dem Schüttgutvorlagebehälter 2 vorgeschalteter Behälter 29, 29' zugeordnet. Die Misch- und Dosiereinrichtung 1 weist einen Mischer 32, im Ausführungsbeispiel einen Trommelmischer, auf, in dem ein Materialgemisch aus originärem Kunststoff, Farbstoffen und Regenerat homogen vermischt wird. Der Mischer 32 arbeitet chargenweise. Eine homogen vermischte Charge wird durch Betätigung einer Umstellklappe 33 in einen der Behälter 29, 29' abgelassen. Dem angewählten Behälter 29 oder 29' wird stets die gesamte Charge zugeführt.

Einer der Behälter, nachfolgend erster Behälter 29 genannt, ist mit einem Leermelder 34 ausgerüstet. Dieser erste Behälter 29 wird mit einer Charge beschickt, wenn der Leermelder 34 anspricht. Der dem anderen Schneckenextruder zugeordnete zweite Behälter 29' wird im Anschluß daran mit der nächsten Charge beschickt, und zwar unabhängig von einer Füllstandsmessung. Der Fig. 9 entnimmt man, daß in dem zweiten Behälter 29' Füllstandsmelder 35a, 35b zur Überwachung eines vorgegebenen Minimalfüllstandes und eines vorgegebenen Maximalfüllstandes angeordnet sind. Spricht einer der Füllstandsmelder 35a oder 35b an, so wird die Schneckendrehzahl des dem zweiten Behälter 29' zugeordneten Schneckenextruders 3' korrigierend angepaßt. Durch die erfindungsgemäße Steuerung ist stets ein gleich großer Materialdurchsatz durch beide Schneckenextruder 3, 3' sichergestellt. Durchsatzabweichungen zwischen den Schneckenextrudern, die sich beispielsweise durch Verschleiß an den Schneckenwellen und/oder Schneckenzylindern oder nicht gleicher Drehzahl der Schneckenextruder ergeben könnten, sind auf diese Weise korrigierbar.

Nach dem erfindungsgemäßen Verfahren kann auch eine Blasformanlage mit mehreren Schneckenextrudern, die gemeinsam an einen Kopf der Blasformanlage angeschlossen sind, betrieben werden. Sämtliche Schüttgutvorlagebehälter werden nach einem festen Plan in einem vorgegebenen, an den Arbeitstakt der Blasformanlage angepaßten Fülltakt mit einer vorbestimmten Schüttgutmenge beschickt. Die Füllstände in den Schüttgutvorlagebehältern werden zu vorgegebenen Zeitpunkten des Arbeitstaktes der Blasformanlage gemessen. Bei Abweichungen der Füllstandsmeßwerte von vorgegebenen Sollwerten erfolgt eine Anpassung der Durchsatzleistung mindestens eines Extruders.

Das Hydrauliksystem 13 sowie das Druckluftnetz 8 werden ebenfalls im Arbeitstakt der Blasformanlage gesteuert. Die Zuführeinrichtung 15 für die Hydraulikflüssigkeit wird in einem vorgegebenen, an den Arbeitstakt der Kunststoffverarbeitungsanlage angepaßten und von einer Druckmessung unabhängigen Fülltakt angesteuert. Der Hydrospeicher 26' wird dann befüllt, bis ein vorgegebener Betriebsdruck erreicht ist. Die Zuführeinrichtung 15 ist an das Steuerprogramm 19 angeschlossen und wird von diesem bei einem vorgegebenen Betriebspunkt angesteuert. Eine ähnliche Steuerung ist für die Druckluftversorgung vorgesehen. Das Druckluftnetz 8 weist einen Druckluftspeicher 17 auf. Dieser ist so ausgelegt, daß Druckschwankungen des Betriebsnetzes 16 keinen merklichen Einfluß auf den Arbeitsdruck des Druckluftnetzes 8 haben. Der Arbeitsdruck des mit dem Druckluftspeicher 17 ausgerüsteten Druckluftnetzes 8 wird in einem vorgegebenen, dem Arbeitstakt der Kunststoffverarbeitungsanlage angepaßten Takt auf einen vorgegebenen Druckwert eingestellt. Die Einstellung des Arbeitsdruckes wird ebenfalls von dem Steuerprogramm 19 bei einem vorgegebenen Betriebspunkt ausgelöst. Die Einstellung des Arbeitsdruckes erfolgt, bevor Stützluft, die im Zuge der Vorformlingsherstellung benötigt wird, dem Druckluftnetz 8 entnommen wird. Der Anfangsarbeitsdruck sowie eine etwaige Druckänderung während des Arbeitstaktes ist von Arbeitstakt zu Arbeitstakt gleich.

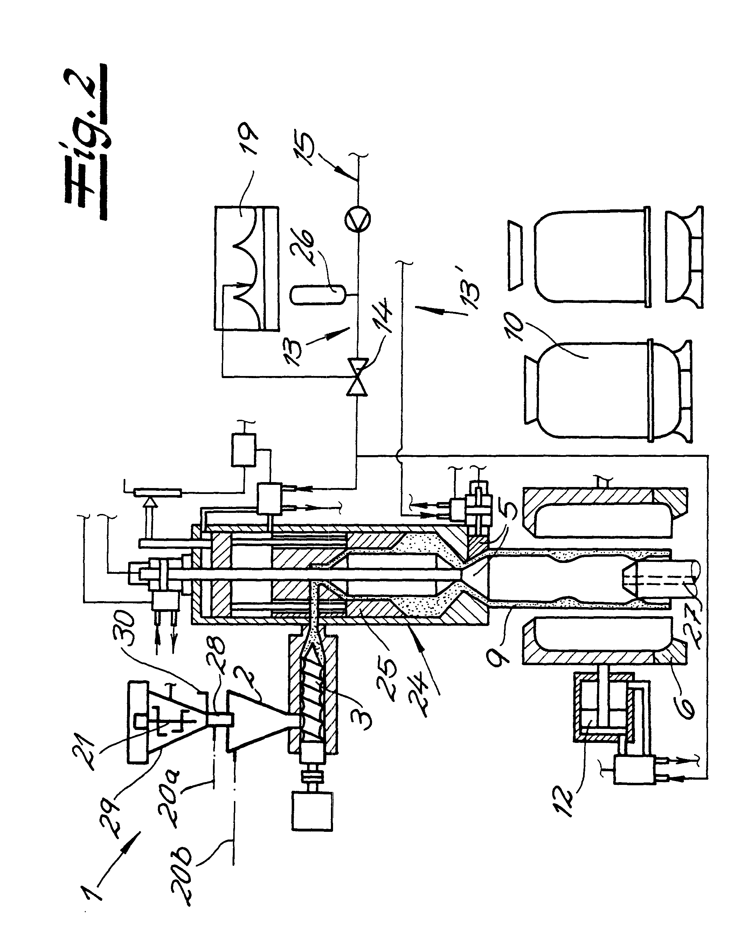

Fig. 2 zeigt das Anlagen- und Steuerungsschema einer Blasformanlage mit Speicherkopf 24. In einem Arbeitstakt wird der Speicherkopf 24 zunächst mit thermoplastifiziertem Kunststoff befüllt, und anschließend wird das Kunststoffmaterial in demselben Arbeitstakt mit Hilfe eines hydraulisch betätigten Kolbens 25 ausgestoßen. Die Zylinder/-Kolbenanordnung 25 des Speicherkopfes 24 ist ebenso wie die Betätigungseinrichtung 12 der Blasform 6 an ein Hydrauliksystem 13 angeschlossen, das einen Hydrospeicher 26 für Hydraulikflüssigkeit enthält. Das Hydrauliksystem 13 weist ferner eine Drucküberwachung 14 sowie eine Zuführeinrichtung 15 auf. Die Zuführeinrichtung 15 für die Hydraulikflüssigkeit wird in einem vorgegebenen, an den Arbeitstakt der Kunststoffverarbeitungsanlage angepaßten und von einer Druckmessung unabhängigem Fülltakt angesteuert, wobei der Hydrospeicher 26 bis zum Erreichen eines vorgegebenen Betriebsdruckes befüllt wird. Die Zuführeinrichtung 15 wird dabei von einem mit dem Arbeitstakt ablaufenden Steuerprogramm 19 bei einem vorgegebenen Betriebspunkt während der Befüllung des Speicherkopfes 24 angesteuert. Bei Beginn des Ausstoßes besitzt das Hydrauliksystem 13 einen definierten Anfangsbetriebsdruck. Der Anfangsbetriebsdruck und etwaige Druckänderungen während des Ausstoßbetriebes sind dann von Arbeitstakt zu Arbeitstakt stets gleich. Ein zweites Hydrauliksystem 13' für eine servohydraulische Steuerung von Düsenspaltverstelleinrichtungen 5 ist ebenfalls an eine im Arbeitstakt der Anlage angesteuerte Zuführeinrichtung 15 für Hydraulikflüssigkeit angeschlossen. Der weitere Aufbau der Anlage entspricht dem zuvor beschriebenen Ausführungsbeispiel. Die im Zusammenhang mit der Figur 1 beschriebenen Steuerungsmaßnahmen sind auch bei der in Figur 2 dargestellten Blasformanlage verwirklicht.

## Patentansprüche

1. Verfahren zum Steuern einer Blasformanlage, die eine Dosiereinrichtung (1) mit mindestens einem Schüttgutvorlagebehälter (2) sowie im Arbeitstakt betätigte Anlagenteile (5, 6, 7, 25) aufweist, **dadurch gekennzeichnet**, daß der Schüttgutvorlagebehälter (2) und/oder ein dem Schüttgutvorlagebehälter vorgeschalteter Behälter (29, 29') in einem vorgegebenen, an den Arbeitstakt der Blasformanlage angepaßten und von einer Füllstandsmessung unabhängigen Fülltakt befüllt wird, wobei der Befüllvorgang von einem mit dem Arbeitstakt ablaufenden Steuerprogramm (19) bei einem vorgegebenen Betriebspunkt oder von einer Schalteinrichtung, die bei einem vorgegebenen Betriebspunkt der Blasformanlage betätigt wird, eingeleitet wird.

2. Verfahren nach Anspruch 1, **dadurch gekennzeichnet**, daß das Schüttgut im Fülltakt durch eine volumetrisch oder gravimetrisch arbeitende Dosiereinrichtung in einer vorher festgelegten Menge dem Schüttgutvorlagebehälter (2) oder dem vorgeschalteten Behälter (29, 29') zugeführt wird.

3. Verfahren nach Anspruch 2, **dadurch gekennzeichnet**, daß die Komponenten dem Schüttgutvorlagebehälter (2) oder dem vorgeschalteten Behälter (29, 29') in einer an das Bruttogewicht eines Hohlkörpers (10) angepaßten Menge oder mit einem ganzzahligen Vielfachen oder einem Bruchteil dieser Menge im Fülltakt zugeführt werden.

4. Verfahren nach einem der Ansprüche 1 bis 3, **dadurch gekennzeichnet**, daß der Schüttgutvorlagebehälter (2) mit einer Füllstandsüberwachung ausgerüstet ist, wobei die Befüllung bei Erreichen eines oberen Grenzwertes (20a) gestoppt wird.

5. Verfahren nach Anspruch 4, **dadurch gekennzeichnet**, daß der dem oberen Grenzwert (20a) zugeordnete Meßfühler in einer Meßkammer (28) des Schüttgutvorlagebehälters (2) angeordnet wird, die einen gegenüber dem Querschnitt des Schüttgutvorlagebehälters (2), welcher der Schüttgutoberfläche zugeordnet ist, reduzierten Meßkammerquerschnitt aufweist.

6. Verfahren nach Anspruch 5, **dadurch gekennzeichnet**, daß der dem oberen Grenzwert (20a) zugeordnete Meßfühler in der dem Schüttgutkegel zugeordneten Mittelachse des Schüttgutvorlagebehälters (2) angeordnet wird.

7. Verfahren nach einem der Ansprüche 1 bis 6, **dadurch gekennzeichnet**, daß der im Fülltakt beschickte Behälter (2, 29, 29') einen Mischer (21) aufweist, der mit einem an den Arbeitstakt der Blasformanlage angepaßten Maschinentakt arbeitet.

8. Verfahren nach einem der Ansprüche 1 bis 7, **dadurch gekennzeichnet**, daß der im Fülltakt beschickte Behälter (2, 29, 29') einen kontinuierlich betriebenen Mischer (21) aufweist, der bei einer Störung der Blasformanlage so betrieben wird, daß die Durchmischung erhalten bleibt.

9. Verfahren nach einem der Ansprüche 1 bis 3, **dadurch gekennzeichnet**, daß das Schüttgut aus einem dem Schüttgutvorlagebehälter (2) vorgeschalteten Behälter (29') durch Betätigen eines Auslaßelementes (30) in den Schüttgutvorlagebehälter (2) abgelassen wird, wobei das Auslaßelement (30) in einem an den Arbeitstakt der Blasformanlage angepaßten Takt geöffnet und geschlossen wird und wobei das Öffnungsintervall so bemessen ist, daß das Schüttgut beim Schließen des Auslaßelementes (30) über das Auslaßelement (30) hinaus in den oberhalb des Schüttgutvorlagebehälters (2) angeordneten Behälter (29') zurückstaut.

10. Verfahren nach einem der Ansprüche 1 bis 9, **dadurch gekennzeichnet**, daß zumindest zwei gravimetrisch dosierte Materialströme (31) dem Behälter (2, 29') zugeführt und durch ein Mischaggregat (21, 21') mit rotierenden Mischelementen und/oder einem statischen Mischer in dem Behälter (2, 29') homogenisiert werden.

11. Verfahren zum Steuern einer Blasformanlage nach einem der Ansprüche 1 bis 3, - mit mindestens zwei Schneckenextrudern, die gemeinsam an einen Kopf der Blasformanlage angeschlossen sind, wobei jedem Extruder ein Schüttgutvorlagebehälter zugeordnet ist und der Schüttgutvorlagebehälter, gegebenenfalls ein vorgeschalteter Behälter, von einer Dosiereinrichtung mit Schüttgut versorgt werden, **dadurch gekennzeichnet**, daß mindestens zwei Schüttgutvorlagebehälter, gegebenenfalls zwei vorgeschaltete Behälter, nach einem festen Plan in einem vorgegebenen, an den Arbeitstakt der Blasformanlage angepaßten Fülltakt mit einer vorbestimmten Schüttgutmenge beschickt werden, daß die Füllstände in den Schüttgutvorlagebehältern bzw. den vorgeschalteten Behältern zu vorgegebenen Zeitpunkten des Arbeitstaktes der Blasformanlage gemessen werden und daß bei Abweichungen der Füllstandsmeßwerte von vorgegebenen Sollwerten mindestens eine Maßnahme zur Durchsatzangleichung eines Schneckenextruders angewendet wird.

12. Verfahren zum Steuern einer Blasformanlage nach einem der Ansprüche 1 bis 3, - mit zwei für gleiche Durchsatzmengen ausgelegten Schneckenextrudern (3, 3'), die gemeinsam an einen Kopf der Blasform angeschlossen sind, wobei jedem Schneckenextruder (3, 3') ein Schüttgutvorlagebehälter (2) sowie ein dem Schüttgutvorlagebehälter vorgeschalteter Behälter (29, 29') zugeordnet ist und die Behälter (29, 29') von einer einzigen Dosiervorrichtung mit einem chargenweise arbeitenden Mischer (32) mit Schüttgut versorgt werden, **dadurch gekennzeichnet**, daß einer der Behälter (29) mit einem Leermelder (34) ausgerüstet ist, daß dieser erste Behälter (29) mit einer Charge beschickt wird, wenn der Leermelder (34) anspricht, daß der dem anderen Schneckenextruder (3') zugeordnete zweite Behälter (29') im Anschluß daran unabhängig von einer Füllstandsmessung mit der nächsten Charge beschickt wird, daß in dem zweiten Behälter (29') Füllstandsmelder (35a, 35b) zur Überwachung eines vorgegebenen Minimalfüllstandes und eines vorgegebenen Maximalfüllstandes angeordnet sind und daß mindestens eine Maßnahme zur Durchsatzangleichung der beiden Schneckenextruder (3, 3') angewendet wird, wenn einer der Füllstandsmelder (35a oder 35b) des zweiten Behälters (29') anspricht.

13. Verfahren zum Steuern einer Blasformanlage, die eine Dosiereinrichtung (1) mit mindestens einem Schüttgutvorlagebehälter (2) sowie hydraulisch im Arbeitstakt betätigte Anlagenteile (5, 6, 25) aufweist und an mindestens ein Hydrauliksystem (13) angeschlossen ist, wobei ein Hydrospeicher (26) des Hydrauliksystems (13) durch eine Zuführeinrichtung (15) mit Hydraulikflüssigkeit bis zum Erreichen eines vorgegebenen Betriebsdruckes befüllt wird, **dadurch gekennzeichnet**, daß die Zuführeinrichtung (15) zur Befüllung des Hydrospeichers (26) von einem mit dem Arbeitstakt der Blasformanlage ablaufenden Steuerprogramm (19) bei einem vorgegebenen Betriebspunkt oder von einer Schalteinrichtung, die bei einem vorgegebenen Betriebspunkt der Blasformanlage betätigt wird, angesteuert wird.

14. Verfahren nach Anspruch 13 bei einer Blasformanlage mit Speicherkopf (24), hydraulisch betätigter Blasform (6) sowie hydraulischen Zusatzeinrichtungen (5), wobei in einem Arbeitstakt der Speicherkopf (24) mit thermoplastifiziertem Kunststoff befüllt und das Kunststoffmaterial anschließend in demselben Arbeitstakt mit Hilfe eines hydraulisch betätigten Kolbens (25) ausgestoßen wird und wobei der Speicherkopf (24), die Blasform (6) und die Zusatzeinrichtungen (5) an das Hydrauliksystem (13) angeschlossen sind, **dadurch gekennzeichnet**, daß der Befüllvorgang des Hydrospeichers (26) zu einem vorgegebenen Betriebspunkt während der Befüllung des Speicherkopfes (24) ausgelöst wird.

15. Verfahren nach Anspruch 14, **dadurch gekennzeichnet**, daß weitere Hydrauliksysteme (13') für eine servohydraulische Steuerung des Speicherkopfaustrittsspaltes und andere Steuerungen ebenfalls einen im Arbeitstakt der Blasformanlage befüllten Hydrospeicher aufweisen.

16. Verfahren zum Steuern einer Blasformanlage, die eine Dosiereinrichtung (1) mit mindestens einem Schüttgutvorlagebehälter (2) sowie pneumatisch im Arbeitstakt betätigte Anlagenteile (7) aufweist und an ein Druckluftnetz angeschlossen ist, **dadurch gekennzeichnet**, daß der Arbeitsdruck des mit einem Druckluftspeicher (17) ausgerüsteten Druckluftnetzes (8) in einem vorgegebenen, dem Arbeitstakt der Blasformanlage angepaßten Takt auf einen vorgegebenen Druckwert eingestellt wird, wobei die Einstellung des Arbeitsdruckes von einem mit dem Arbeitstakt ablaufenden Steuerprogramm (19) bei einem vorgegebenen Betriebspunkt oder von einer Schalteinrichtung, die bei einem vorgegebenen Betriebspunkt der Blasformanlage betätigt wird, ausgelöst wird.

17. Verfahren nach Anspruch 16, **dadurch gekennzeichnet**, daß Stütz- oder Blasluft, die im Zuge einer Vorformlingsherstellung vor der Einformung des Vorformlings (9) in einer Blasform (6) benötigt wird, aus dem Druckluftnetz (8) nach erfolgter Einstellung des Arbeitsdruckes entnommen wird.

## Claims

1. A process for controlling a blow-moulding installation comprising a metering device and at least one bulk material storage container (2) and having parts (5, 6, 7, 25) operated in the working cycle, **characterised in that** the bulk material storage container (2) and/or a container (29, 29') upstream thereof are filled in a preset cycle adapted to the working cycle of the blow-moulding installation and independent of a filling-level measurement, the filling operation being initiated at a preset operating point by a control program (19) synchronised with the operating cycle or by a switching device actuated at a preset operating point of the blow-moulding installation.

2. A process according to claim 1, **characterised in that** during the filling cycle the bulk material is supplied to the bulk material storage container (2) or the upstream container (29, 29') in a predetermined amount by a volumetric or gravimetric metering device.

3. A process according to claim 2, **characterised in that** in the filling cycle the components are supplied to the bulk material storage container (2) or the upstream container (29, 29') in an amount adapted to the gross weight of a hollow member (10) or an integral multiple or fraction of the said amount.

4. A process according to any of claims 1 to 3, **characterised in that** the bulk material storage container (2) is equipped with a filling-level monitor, and filling is stopped when an upper limit (20a) is reached.

5. A process according to claim 4, **characterised in that** the sensor associated with the upper limit (20a) is disposed in a measuring chamber (28) of the bulk material storage container (2), the measuring chamber having a cross-section smaller than the cross-section of the bulk material storage container (2) associated with the surface of the bulk material.

6. A process according to claim 5, **characterised in that** the sensor associated with the upper limit (20a) is disposed along the central axis of the bulk material storage container (2) associated with the cone of bulk material.

7. A process according to any of claims 1 to 6, **characterised in that** the container (2, 29, 29') loaded in the filling cycle comprises a mixer (21) which operates at a cycle adapted to the working cycle of the blow-moulding installation.

8. A process according to any of claims 1 to 7, **characterised in that** the container (2, 29, 29') loaded in the filling cycle comprises a continuously operating mixer (21) which in the event of a fault in the blow-moulding installation is so operated that mixing remains as thorough as before.

9. A process according to any of claims 1 to 3, **characterised in that** the bulk material from a container (29') upstream of the bulk material storage container (2) is discharged into the bulk material storage container (2) by actuation of an outlet element (30), the outlet element (30) being opened and closed in a cycle adapted to the working cycle of the blow-moulding installation and the opening interval being made such that when the outlet element (30) is closed, the bulk material piles up over the outlet element (30) into the container (29') disposed above the bulk material storage container (2).

10. A process according to any of claims 1 to 9, **characterised in that** at least two gravimetrically metered flows of material (31) are supplied to the container (2, 29') and homogenised therein by a static mixer and/or a mixing unit (21, 21') with rotating mixing elements.

11. A process for controlling a blow-moulding installation according to any of claims 1 to 3, comprising at least two screw extruders connected in common to a head of the blow-moulding installation, a bulk material storage container being associated with each extruder and the bulk material storage container or if required a container upstream thereof being supplied with bulk material by a metering device, **characterised in that** at least two bulk material storage containers, if required two upstream containers, are loaded in accordance with a fixed plan with a predetermined amount of bulk material in a filling cycle adapted to the working cycle of the blow-moulding installation, in that the filling levels in the bulk material storage containers or the upstream containers are measured at set times in the working cycle of the blow-moulding installation, and in that if the filling-level measurements deviate from preset values at least one step is taken in order to correct the throughput of a screw extruder.

12. A process for controlling a blow-moulding installation according to any of claims 1 to 3 comprising two screw extruders (3, 3') designed for equal throughput amounts and together connected to a head of the blow mould, each screw extruder (3, 3') being associated with a bulk material storage container (2) and a container (29, 29') upstream of the bulk material storage container and the containers (29, 29') being supplied with bulk naterial by a single metering device comprising a batchwise operating mixer (32), **characterised in that** one of the containers (29) is equipped with an empty indicator (34), in that the said first container (29) is loaded with a batch when the empty indicator (34) responds, in that the second container (29') associated with the other screw extruder (3') is then loaded with the next batch independently of a filling-level measurement, in that filling-level indicators (35a, 35b) for monitoring a preset minimum filling level and a preset maximum filling level are disposed in the second container (29'), and in that at least one step is taken for correcting the throughput of the two screw extruders (3, 3') if one of the filling-level indicators (35a or 35b) on the second container (29') responds.

13. A process for controlling a blow-moulding installation comprising a metering device (1) with at least one bulk material storage container (2) and having parts (5, 6, 25) hydraulically operated in the working cycle and connected to at least one hydraulic system (13), a hydraulic reservoir (26) in the hydraulic system (13) being filled by a supply means (15) with hydraulic fluid until a preset working pressure is reached, **characterised in that** the supply means (15) for filling the hydraulic reservoir (26) is actuated at a preset operating point by a control program (19) synchronised with the work cycle of the blow-moulding installation or by a switching device actuated at a preset operating point of the blow-moulding installation.

14. A process according to claim 13 in a blow-moulding installation comprising a storage head (24), a hydraulically actuated blow mould (6) and hydraulic additional devices (5), wherein during a work cycle the storage head (24) is filled with thermoplasticised material and the plastic material is ejected in the same work cycle by a hydraulically actuated piston (25) and wherein the storage head (24), the blow mould (6) and the additional devices (5) are connected to the hydraulic system (13), **characterised in that** the process of filling the hydraulic reservoir (26) is triggered at a preset operating point during filling of the storage head (24).

15. A process according to claim 14, **characterised in that** additional hydraulic systems (13') for servohydraulic control of the storage-head outlet gap and other controls likewise comprise a hydraulic reservoir filled in the work cycle of the blow-moulding installation.

16. A process for controlling a blow-moulding installation comprising a metering device (1) with at least one bulk material storage container (2) and comprising parts (7) pneumatically actuated in the work cycle and connected to a compressed-air network, **characterised in that** the working pressure of the compressed-air network (8) equipped with a compressed-air reservoir (17) is adjusted to a preset pressure in a preset cycle adapted to the work cycle of the blow-moulding installation, the adjustment of the working pressure being triggered at a preset operating point by a control program (19) synchronised with the work cycle or by a switching device actuated at a preset operating point of the blow-moulding installation.

17. A process according to claim 16, **characterised in that** back-up or blast air needed during production of a preform before insertion of the preform (9) in a blow mould (6) is taken from the compressed-air network (8) after adjustment of the working pressure.

## Revendications

1. Procédé de commande d'une installation de formage par soufflage comprenant un dispositif de dosage (1) avec au moins un réservoir (2) d'alimentation en produit en vrac ainsi que des éléments d'installation (5, 6, 7, 25) qui sont actionnés à la cadence de travail, **caractérisé en ce que** le réservoir (2) d'alimentation en produit en vrac et/ou un réservoir (29, 29') placé en amont dudit réservoir d'alimentation en produit en vrac sont remplis avec une cadence de remplissage adaptée à la cadence de travail de l'installation de formage par soufflage, indépendante d'une mesure de niveau de remplissage, le processus de remplissage étant déclenché par un programme de commande (19) qui se déroule avec la cadence de travail, pour un point de fonctionnement prédéterminé ou par un dispositif de commutation qui est actionné à un point de fonctionnement de l'installation de formage par soufflage.

2. Procédé selon la revendication 1, **caractérisé en ce que** le produit en vrac est amené à la cadence de remplissage, en une quantité préalablement déterminée, au réservoir (2) d'alimentation en produit en vrac ou au réservoir (29, 29') placé en amont par un dispositif de dosage volumétrique ou gravimétrique.

3. Procédé selon la revendication 2, **caractérisé en ce que** les composants sont amenés au réservoir (2) d'alimentation en produit en vrac ou au réservoir (29, 29') placé en amont, à la cadence de remplissage, en une quantité adaptée au poids brut du corps creux (10) ou en un multiple entier ou une fraction de cette quantité.

4. Procédé selon une des revendications 1 à 3, **caractérisé en ce que** le réservoir (2) d'alimentation en produit en vrac est pourvu d'un moyen de surveillance du niveau de remplissage, le remplissage étant arrêté lorsqu'une valeur seuil supérieure (20a) est atteinte.

5. Procédé selon la revendication 4, **caractérisé en ce que** le capteur de mesure associé à la valeur seuil supérieure (20a) est disposé dans une chambre de mesure du réservoir (2) d'alimentation en produit en vrac, à section réduite par rapport à la section du réservoir (2) d'alimentation en produit en vrac correspondant à la surface du produit en vrac.

6. Procédé selon la revendication 5, **caractérisé en ce que** le capteur de mesure associé à la valeur seuil supérieure (20a) est disposé sur l'axe médian du réservoir (2) d'alimentation en produit en vrac associé au cône déversoir.

7. Procédé selon une des revendications 1 à 6, **caractérisé en ce que** le réservoir (2, 29, 29') chargé à la cadence de remplissage comporte un mélangeur (21) qui travaille avec une cadence adaptée à la cadence de travail de l'installation de formage par soufflage.

8. Procédé selon une des revendications 1 à 7, **caractérisé en ce que** le réservoir (2, 29, 29') chargé à la cadence de remplissage comporte un mélangeur (21) qui fonctionne en continu et qui, en cas de dysfonctionnement de l'installation de formage par soufflage, est actionné de telle sorte que le mélange soit maintenu.

9. Procédé selon une des revendications 1 à 3, **caractérisé en ce que** le produit en vrac s'écoule d'un réservoir (29') placé en amont du réservoir (2) d'alimentation en produit en vrac dans ledit réservoir (2) d'alimentation en produit en vrac par l'actionnement d'un organe de sortie (30), l'organe de sortie (30) étant ouvert et fermé avec une cadence qui est adaptée à la cadence de travail de l'installation de formage par soufflage et l'intervalle d'ouverture étant calculé tel que le produit en vrac, lors de la fermeture de l'organe de sortie (30), soit retenu dans le réservoir (29') placé en amont du réservoir (2) d'alimentation en produit en vrac.

10. Procédé selon une des revendications 1 à 9, **caractérisé en ce qu**'au moins deux flux de matériau (31) dosés par gravimétrie sont amenés au réservoir (2, 29') et sont homogénéisés par un module mélangeur (21, 21') avec des éléments mélangeurs rotatifs et/ou un mélangeur statique dans le réservoir (29').

11. Procédé de commande d'une installation de formage par soufflage selon une des revendications 1 à 3, comportant au moins deux extrudeuses à vis qui sont connectées conjointement à une tête d'une installation de formage par soufflage, un réservoir d'alimentation en produit en vrac étant associé à chacune des extrudeuses et le réservoir d'alimentation en produit en vrac, éventuellement un réservoir placé en amont, étant alimenté en produit en vrac par un dispositif de dosage, **caractérisé en ce qu**'au moins deux réservoirs d'alimentation en produit en vrac, éventuellement deux réservoirs placés en amont, sont alimentés avec quantité de produit en vrac prédéterminée, selon un programme fixe, avec une cadence de remplissage qui est adaptée à la cadence de travail de l'installation de formage par soufflage, en ce que les niveaux de remplissage des réservoirs d'alimentation en produit en vrac ou des réservoirs placés en amont sont mesurés à des instants déterminés du cycle de travail de l'installation de formage par soufflage et en ce que, en cas d'écart des valeurs mesurées de niveau de remplissage par rapport à des valeurs de consigne, au moins une disposition d'adaptation au débit d'une extrudeuse à vis est mise en oeuvre.

12. Procédé de commande d'une installation de formage par soufflage selon une des revendications 1 à 3, comportant deux extrudeuses à vis (3, 3') avec des débits identiques, qui sont connectées conjointement à une tête du moule de formage par soufflage, un réservoir (2) d'alimentation en produit en vrac ainsi qu'un réservoir placé en amont dudit réservoir (2) d'alimentation en produit en vrac étant associés à chacune des extrudeuses à vis (3, 3'), et les réservoirs (29, 29') étant alimentés en produit en vrac par un dispositif de dosage unique, avec un mélangeur (32) travaillant par charges, **caractérisé en ce que** l'un des réservoirs (29) est pourvu d'un détecteur d'épuisement (34), en ce que ce premier réservoir (29) reçoit une charge lorsque le détecteur d'épuisement (34) réagit, en ce que le second réservoir (29') associé à l'autre extrudeuse à vis (3') reçoit la charge suivante indépendamment de toute mesure de niveau de remplissage, en ce que des détecteurs de niveau de remplissage (35a, 35b) sont disposés dans le second réservoir (29') aux fins de surveiller un niveau de remplissage minimal prédéterminé et un niveau de remplissage maximal prédéterminé et en ce qu'au moins une disposition pour l'adaptation du débit des deux extrudeuses à vis (3, 3') est mise en oeuvre lorsque l'un des détecteurs de niveau de remplissage (35a ou 35b) du second réservoir (29') réagit.

13. Procédé de commande d'une installation de formage par soufflage comprenant un dispositif de dosage (1) avec au moins un réservoir (2) d'alimentation en produit en vrac ainsi que des éléments d'installation (5, 6, 25) qui sont actionnés hydrauliquement à la cadence de travail et sont connectés à au moins un circuit hydraulique (13), un accumulateur hydraulique (26) du circuit hydraulique (13) étant rempli en liquide hydraulique par un dispositif d'alimentation (15), jusqu'à obtention d'une pression de service prédéterminée, **caractérisé en ce que** le dispositif d'alimentation (15) pour le remplissage du réservoir hydraulique (26) est piloté par un programme de commande (19) qui se déroule à la cadence de travail de l'installation de formage par soufflage, pour un point de fonctionnement donné ou par un dispositif de commutation qui est activé pour un point de fonctionnement donné de l'installation de formage par soufflage.

14. Procédé selon la revendication 13 appliqué à une installation de formage par soufflage comprenant une tête à accumulation (24), un moule de soufflage (6) commandé par voie hydraulique ainsi que des dispositifs additionnels (5) hydrauliques, la tête à accumulation (24), au cours d'un temps de travail étant remplie de matière thermoplastique et la matière plastique étant éjectée au cours du même temps de travail à l'aide d'un piston (25) actionné par voie hydraulique, la tête à accumulation (24), le moule de soufflage (6) et les dispositifs additionnels (5) étant connectés au circuit hydraulique (13), **caractérisé en ce que** le processus de remplissage de l'accumulateur hydraulique (26) est déclenché en un point de fonctionnement prédéterminé pendant le remplissage de la tête à accumulation(24).

15. Procédé selon la revendication 14, **caractérisé en ce que** des circuits hydrauliques supplémentaires (13') pour une commande hydraulique assistée de l'ouverture de sortie de la tête à accumulation et d'autres commandes comportent également un accumulateur hydraulique qui est rempli à la cadence de travail de l'installation de formage par soufflage.

16. Procédé de commande d'une installation de formage par soufflage comprenant un dispositif de dosage (1) avec au moins un réservoir (2) d'alimentation en produit en vrac ainsi que des éléments d'installation (7) pneumatiques qui sont actionnés à la cadence de travail et sont connectés à un circuit d'air comprimé, **caractérisé en ce que** la pression de travail du circuit d'air comprimé (8) comportant un accumulateur d'air comprimé (17) est réglée à une valeur prédéterminée avec une cadence prédéterminée adaptée à la cadence de travail de l'installation de formage par soufflage, le réglage de la pression de travail étant déclenché par un programme de commande (19) qui se déroule à la cadence de travail pour un point de fonctionnement prédéterminé ou par un dispositif de commutation qui est actionné pour un point de fonctionnement prédéterminé de l'installation de formage par soufflage.

17. Procédé selon la revendication 16, **caractérisé en ce que** de l'air de support ou de l'air de soufflage qui est nécessaire lors de la fabrication de l'ébauche (9) avant le façonnage de l'ébauche dans un moule de soufflage (6) est prélevé sur le circuit d'air comprimé (8) une fois le réglage de la pression de travail terminé.
